Europäisches Patentamt

European Patent Office

Office européen des brevets

(11) Veröffentlichungsnummer: **0 290 801 B1**

(19)

# (12) EUROPÄISCHE PATENTSCHRIFT

(45) Veröffentlichungstag der Patentschrift: **18.03.92**

(21) Anmeldenummer: **88105859.8**

(22) Anmeldetag: **13.04.88**

(51) Int. Cl.⁵: **A47J 31/02**

(54) **Aufsatzfilter für die Herstellung von Kaffee-Getränken.**

(30) Priorität: **09.05.87 DE 3715519**

(43) Veröffentlichungstag der Anmeldung:
**17.11.88 Patentblatt 88/46**

(45) Bekanntmachung des Hinweises auf die
Patenterteilung:
**18.03.92 Patentblatt 92/12**

(84) Benannte Vertragsstaaten:
**AT BE CH DE ES FR GB IT LI LU NL SE**

(56) Entgegenhaltungen:
DE-A- 2 738 969     FR-A- 1 562 031
GB-A- 2 028 675     GB-A- 2 052 250
GB-A- 2 091 541     US-A- 2 743 664
US-A- 3 971 305     US-A- 4 519 911

(73) Patentinhaber: **Jacobs Suchard GmbH
Langemarckstrasse 8-20
W-2800 Bremen 1(DE)**

(72) Erfinder: **Poulallion, Jean
14, rue Eugene Manuel
F-85016 Paris(FR)**

(74) Vertreter: **Bolte, Erich, Dipl.-Ing. et al
c/o Meissner, Bolte & Partner Patentanwälte
Hollerallee 73
W-2800 Bremen 1(DE)**

EP 0 290 801 B1

## Beschreibung

Die Erfindung betrifft einen Aufsatzfilter für die Herstellung von gefilterten Getränken, insbesondere aus Röstkaffee, mit einem Filterbeutel und an gegenüberliegenden Seiten desselben angeordneten Stützorganen, die aus einer flach am Filterbeutel anliegenden Ausgangsstellung in eine quer zu diesem gerichtete, im wesentlichen horizontale Stützstellung schwenkbar sind.

Aufsatzfilter der hier angesprochenen Art dienen zur einfachen Herstellung von gefilterten Getränken, insbesondere Kaffee-Getränken. Der Aufsatzfilter - für den einmaligen Gebrauch bestimmt - wird auf den Rand eines Gefäßes, insbesondere auf einen Tassenrand, aufgesetzt.

Gemäß US-A-4 519 911 ist ein zusammenfaltbarer Aufsatzfilter bekannt, der oberhalb eines zu füllenden Gefäßes aufgesetzt wird. Seitlich angebrachte Stützbeine fixieren den Aufsatzfilter am oberen Rand des Gefäßes. Nachteilig an dem bekannten Aufsatzfilter ist die umständliche Handhabbarkeit beim Aufsetzen. Ferner ist ein erheblicher Materialaufwand erforderlich.

Nach einem bekannten Aufsatzfilter aus der JP-OS 59-13232 sind im aufgefalteten Zustand seitlich Flügel angeordnet, die den Aufsatzfilter auf den Behälterrand abstützen. Dieser Ausführungsform mangelt es jedoch an einer stabilen Fixierung des Filters in der aufgefalteten Position.

Der Erfindung liegt die Aufgabe zugrunde, einen auffaltbaren Aufsatzfilter derart auszubilden, daß dieser kostengünstig hergestellt werden kann, sich durch einfache Handhabung auszeichnet und im aufgefalteten Zustand stabil fixiert werden kann.

Zur Lösung dieser Aufgabe weist der erfindungsgemäße Aufsatzfilter die Merkmale des Anspruchs 1 auf.

Die Stützorgane sind beim erfindungsgemäßen Aufsatzfilter in der Ausgangsstellung flach an den Filterbeutel angelegt und werden für die Gebrauchsstellung quer zu diesem gefaltet und in dieser Stützstellung fixiert. Der Aufsatzfilter kann so mit den horizontal gerichteten Stützorganen auf den Rand des Gefäßes aufgesetzt werden, wobei der oben weit geöffnete Filterbeutel in das Gefäß hineinragt. Die Stützorgane erstrecken sich mit Abstand vom oberen Rand des Filterbeutels.

Nach einem weiteren Merkmal der Erfindung ist der Filterbeutel im oberen Bereich mit ringsherum angeordneten Versteifungen versehen, insbesondere aus Karton-Zuschnitten. Diese sind außen auf den Filterbeutel aufgesetzt, nämlich aufgeklebt bzw. angesiegelt. Die einander gegenüberliegenden Stützorgane sind an den Versteifungen, und zwar an mittleren Versteifungen, befestigt bzw. bilden mit diesen ein gemeinsames Werkstück. Beim Auffalten des Filterbeutels werden die rahmenartig ausgebildeten Stützorgane in eine Stellung quer zu den Versteifungen gefaltet, wobei seitliche Bereiche der Stützorgane als Klemmflügel unter erhöhter Reibung an den seitlichen Versteifungen (Seitenversteifungen) anliegen und die Stützstellung der Stützorgane fixieren. Infolge der Ausbildung der Versteifung aus mehreren einzelnen Zuschnitten (aus Karton oder dergleichen) stellt sich beim Verschwenken der rahmenartigen Stützorgane in die Stützstellung eine polygonale, insbesondere sechseckige, Öffnungsgestalt des Filterbeutels ein.

Der so ausgebildete Aufsatzfilter erfordert einen geringen Materialbedarf, nämlich lediglich den aus Filterpapier oder dergleichen bestehenden Filterbeutel und verhältnismäßig kleine Zuschnitte aus stabilisierendem Werkstoff, insbesondere Karton. Gleichwohl ist der Aufsatzfilter in eine für die Handhabung besonders günstige dreidimensionale Gestalt auffaltbar.

Ein Ausführungsbeispiel des erfindungsgemäßen Aufsatzfilters wird nachfolgend anhand der Zeichnungen näher erläutert. Es zeigt:

Fig. 1     einen Aufsatzfilter in flach zusammengefalteter Ausgangsstellung, in Seitenansicht,

Fig. 2     einen mittigen Vertikalschnitt durch den Aufsatzfilter in der Position gemäß Fig. 1,

Fig. 3     einen Aufsatzfilter in Anordnung auf einem Trinkgefäß im Grundriß bei unterschiedlichen Stellungen von Stützorganen,

Fig. 4     eine Vorderansicht des Aufsatzfilters in der teilweise aufgefalteten Position gemäß Fig. 3,

Fig. 5     den vollständig aufgefalteten Aufsatzfilter in einer Ansicht gemäß Fig. 4,

Fig. 6     einen Vertikalschnitt durch einen aufgefalteten Aufsatzfilter im Bereich der Stützorgane,

Fig. 7     eine gegenüber Fig. 4 um 90° versetzte Seitenansicht eines aufgefalteten Aufsatzfilters auf einem Trinkgefäß.

Das in den Zeichnungen dargestellte Ausführungsbeispiel eines Aufsatzfilters 10 ist vor allem für die Zubereitung von Kaffee-Getränken unmittelbar in kleinen Gefäßen, insbesondere in Tassen 11, bestimmt und geeignet. Der Aufsatzfilter 10 wird für die Zubereitung des Getränks auf einen oberen Rand des Behälters - hier auf einen Tassenrand 12 - aufgesetzt. Der Aufsatzfilter 10 besteht im Grundaufbau aus einem frei nach unten in die Tasse 11 hängenden Filterbeutel 13 und aus (dünnem) Karton bestehenden Organen zum Halten und Verstärken bzw. Aussteifen des Filterbeutels 13.

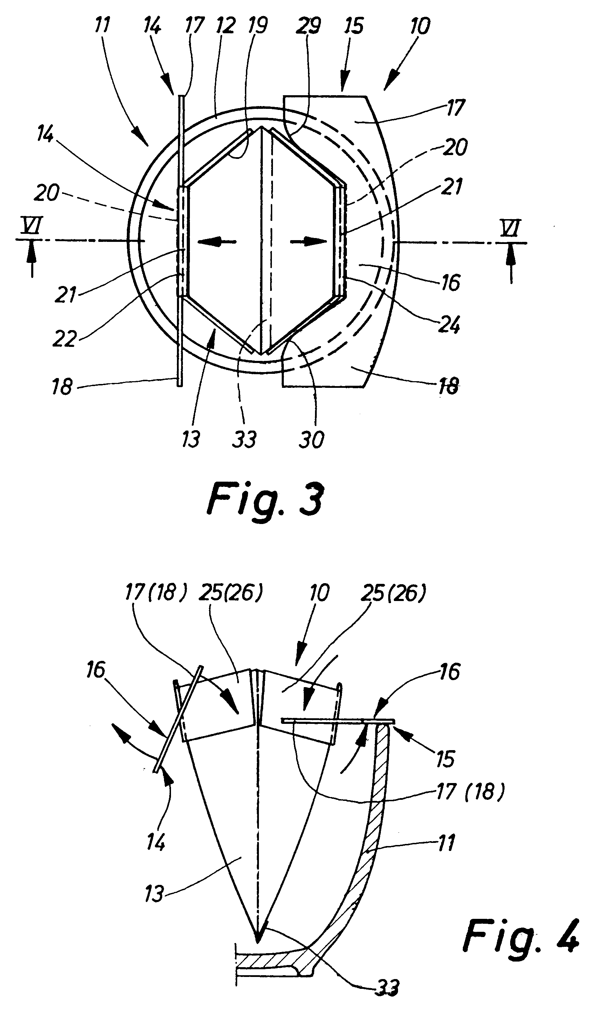

An zwei einander gegenüberliegenden Seiten des Filterbeutels 13 ist jeweils ein Stützorgan 14, 15 angeordnet. Diese sind in aufgefalteter, abstützzender Stellung (Fig. 3, rechts) rahmenartig ausgebildet, nämlich als den oberen Bereich des Filterbeutels 13 annähernd zur Hälfte umschließender Halbrahmen. Funktionell besteht jedes Stützorgan 14, 15 aus einem Mittelteil 16, der die eigentliche Stütz- bzw. Tragfunktion ausübt, und seitlichen Klemmflügeln 17, 18. Die Stützorgane 14, 15 liegen mit allen vorgenannten Teilbereichen auf dem Tassenrand 12 auf.

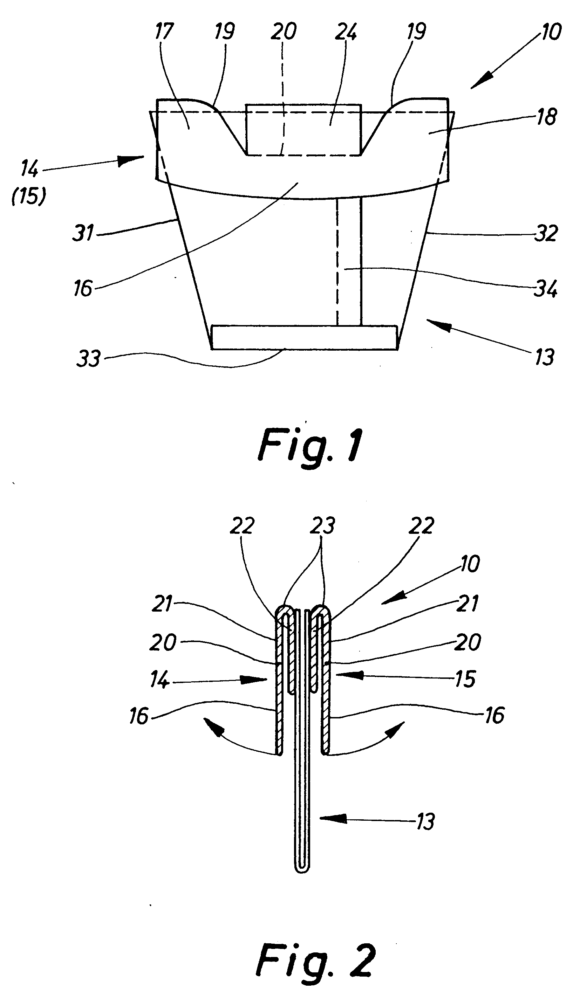

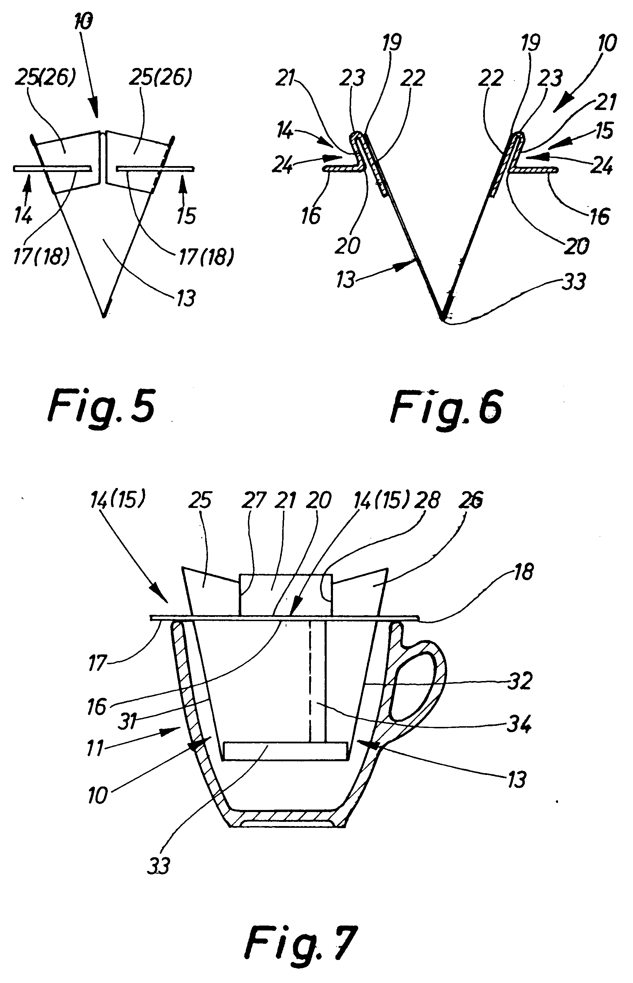

Die Stützorgane 14, 15 sind schwenkbar bzw. faltbar mit der Außenseite des Filterbeutels 13 an exakt einander gegenüberliegenden Seiten verbunden. In der Ausgangsstellung (Fig. 1 bzw. Fig. 2) liegen die Stützorgane 14, 15 flach an einander gegenüberliegenden Seiten des ebenfalls flach zusammengelegten Filterbeutels 13 an. Mit Abstand von einem oberen Beutelrand 19 erstreckt sich eine Faltlinie 20 für das mit dem Filterbeutel 13 verbundene Stützorgan 14, 15. Um diese querliegende bzw. horizontal verlaufende Faltlinie 20 wird das Stützorgan 14, 15 aus der flach am Filterbeutel 13 anliegenden in die quergerichtete Stützstellung (Fig. 5) gefaltet bzw. verschwenkt. Die Faltlinie 20 erstreckt sich dabei lediglich im Bereich des Mittelteils 16, während die Klemmflügel 17, 18 frei bewegbar sind, ohne Verbindung mit dem Filterbeutel 13.

Das Stützorgan 14, 15 ist mit einer ebenfalls an der Außenseite des Filterbeutels 13 im oberen Bereich desselben angeordneten Versteifung - Mittelversteifung 21 - verbunden. Diese ist als rechteckiger Zuschnitt, insbesondere aus dünnem Karton, ausgebildet und vorzugsweise vollflächig mit dem Filterbeutel 13 verklebt oder versiegelt. Das Stützorgan 14, 15 ist mit dieser Mittelversteifung 21 über die Faltlinie 20 verbunden, so daß beide Teile ein gemeinsames Werkstück bzw. Stanzteil bilden. Bei dem gezeigten Ausführungsbeispiel ist diese Einzelheit so gestaltet, daß die Mittelversteifung 21 aus einem mit dem Filterbeutel 13 unmittelbar verbundenen Wandschenkel 22 und einem über eine obere Faltkante 23 mit diesem verbundenen Außenschenkel 24 besteht. Dieser ist an dem Wandschenkel 22 befestigt, z.B. durch Klebung oder Verschweißung. Das Stützorgan 14, 15 ist - über die Faltlinie 20 - mit dem unteren Rand des Außenschenkels 24 verbunden. Durch diese Konstruktion erhält der Filterbeutel 13 im mittleren Bereich bzw. im Bereich der Anlenkung der Stützorgane 14, 15 eine erhöhte Steifigkeit.

An die Mittelversteifung 21 schließen zu den Seiten hin bzw. in Umfangsrichtung des Filterbeutels 13 Seitenversteifungen 25 und 26 auf beiden Seiten an. Diese sind im vorliegenden Falle als gesonderte, annähernd rechteckige Zuschnitte aus dünnem Karton oder dergleichen ausgebildet und ebenfalls mit der Außenseite des Filterbeutels 13 durch Klebung oder Schweißung verbunden. Die Seitenversteifungen 25, 26 schließen unmittelbar an die Mittelversteifung 21 an. Stoßkanten 27 und 28 bilden Faltstellen für den Filterbeutel 13 in dessen aufgefalteter Position, so daß der obere Bereich des Filterbeutels, nämlich der ausgesteifte, in aufgefalteter Stellung eine polygonale, im vorliegenden Falle sechseckige Querschnittsform erhält.

Die Seitenversteifungen 25, 26 sind weiterhin von Bedeutung für die Fixierung der Stützorgane 14, 15 in der (horizontalen) Stützstellung. Die Klemmflügel 17, 18 der Stützorgane 14, 15 sind zu diesem Zweck mit - im Grundriß gesehen - nach innen gezogenen, bogenförmigen Klemmkanten 29, 30 ausgerüstet, die bei der Schwenkbewegung der Stützorgane 14, 15 aus der flach zusammengefalteten in die Stützstellung unter Reibung an den Seitenversteifungen 25, 26 entlanggleiten und bei Erreichen der horizontalen Stützstellung eine Klemm- und damit Haltekraft auf die Stützorgane 14, 15 ausüben. Diese sind so in der Stützstellung lösbar fixiert.

Der Filterbeutel 13 ist im vorliegenden Falle nach unten sich trichterförmig verjüngend ausgebildet. Seitenfaltkanten 31, 32 verlaufen konvergierend zu einer Bodennaht 33. Die Seitenfaltkanten 31, 32 ermöglichen das Zusammenfalten des Filterbeutels in die flache Position. Zugleich verläuft durch die Seitenfaltkanten 31, 32 (gedachte) Mittelebene des Aufsatzfilters 10, die diesen in zwei übereinstimmend ausgebildete Hälften teilt. Eine Längsnaht 34 des Filterbeutels 13 ist in einem geeigneten Bereich zwischen den Seitenfaltkanten 31, 32 gebildet.

Die Abmessungen sind so gewählt, daß der überwiegende, untere Bereich des Filterbeutels 13 in der Aufgußstellung (Fig. 7) in den Behälter (Tasse 11) hineinragt. Die oberhalb der Stützorgane 14, 15 angeordneten Verstärkungen bzw. Versteifungen liegen außerhalb der Tasse 11. Der untere Bereich des Filterbeutels 13 taucht demnach in die Aufgußflüssigkeit ein.

Einzelne Konstruktionselemente können abweichend gestaltet sein. So können die Seitenversteifungen 25, 26 mit der Mittelversteifung 21 und dem zugeordneten Stützorgan 14, 15 ein gemeinsames, einteiliges Werkstück bilden mit vorgeprägten Faltkanten im Bereich der Stoßkanten 27, 28. Auch kann der Filterbeutel 13 eine andere geometrische Gestalt aufweisen. Die Versteifung am oberen Bereich des Filterbeutels 13, insbesondere die Seitenversteifungen 15, 16, können mit durch Prägung eingeformten Rillen bzw. Nuten für den formschlüssigen Eingriff der Klemmflügel 17, 18 in der Stützstellung der Stützorgane 14, 15 versehen sein.

**Patentansprüche**

1. Aufsatzfilter für die Herstellung von gefilterten Getränken, insbesondere aus Röstkaffee, mit einem Filterbeutel (13) und an gegenüberliegenden Seiten desselben angeordneten Stützorganen (14, 15), die aus einer flach am Filterbeutel (13) anliegenden Ausgangsstellung in eine quer zu diesem gerichtete, im wesentlichen horizontale Stützstellung schwenkbar sind, **dadurch gekennzeichnet,** daß in der Stützstellung Klemmflügel (17, 18) als Teile der Stützorgane (14, 15) durch klemmende Anlage an versteiften Klemmflächen an der Außenseite des Filterbeutels (13) fixiert sind.

2. Aufsatzfilter nach Anspruch 1, dadurch gekennzeichnet, daß ein oberer Randbereich des Filterbeutels (13) mit einer äußeren Versteifung versehen ist, die aus einer Mittelversteifung (21) und an diese zu beiden Seiten anschließenden Seitenversteifungen (25, 26) besteht, wobei die Seitenversteifungen (25, 26) als Klemmflächen zur fixierenden Anlage der Klemmflügel (17, 18) dienen.

3. Aufsatzfilter nach Anspruch 1 oder 2, dadurch gekennzeichnet, daß die Klemmflügel (17, 18) jeweils zu beiden Seiten eines Mittelteils (16) der Stützorgane (14, 15) angeordnet sind.

4. Aufsatzfilter nach Anspruch 1 oder 2, dadurch gekennzeichnet, daß die Stützorgane (14, 15) mit der Mittelversteifung (21) einstückig ausgebildet sind, insbesondere als Stanzstücke aus dünnem Karton.

5. Aufsatzfilter nach Anspruch 1 sowie einem oder mehreren der weiteren Ansprüche, dadurch gekennzeichnet, daß die Seitenversteifungen (25, 26) als gesonderte, mit dem Filterbeutel (13) verbundene Zuschnitte aus dünnem Karton ausgebildet sind.

6. Aufsatzfilter nach Anspruch 5 sowie einem oder mehreren der weiteren Ansprüche, dadurch gekennzeichnet, daß zwischen der Mittelversteifung (21) und den Seitenversteifungen (25, 26) Gelenkstellen (Stoßkanten 27, 28) gebildet sind, durch die der obere Bereich des Filterbeutels (13) aufgrund entsprechender Gestalt der Stützorgane (14, 15) in eine polygonale, insbesondere sechseckige Querschnittsgestalt, formbar ist.

## Claims

1. Stand-on filter for making filtered drinks, especially made of roasted coffee, with a filter bag (13) and supporting members (14, 15) arranged at opposite sides of the same which can be pivoted out of a starting position lying flat against the filter bag (13) into a substantially horizontal supporting position directed transversely relative to this, characterized in that in the supporting position clamping wings (17, 18) are fixed as parts of the supporting members (14, 15) by clamping bearing on reinforced clamping surfaces on the outside of the filter bag (13).

2. Stand-on filter according to Claim 1, characterized in that an upper edge region of the filter bag (13) is equipped with an outer reinforcement which consists of a central reinforcement (21) and lateral reinforcements (25, 26) adjoining this on both sides, the lateral reinforcements (25, 26) serving as clamping faces for the fixing bearing of the clamping wings (17, 18).

3. Stand-on filter according to Claim 1 or 2, characterized in that the clamping wings (17, 18) are in each case arranged on both sides of a central part (16) of the supporting members (14, 15).

4. Stand-on filter according to Claim 1 or 2, characterized in that supporting members (14, 15) and the central reinforcement (21) are made in one piece, especially as an article punched from thin cardboard.

5. Stand-on filter according to Claim 1 and one or more of the further claims, characterized in that the lateral reinforcements (25, 26) are designed as separate blanks of thin cardboard which are connected to the filter bag (13).

6. Stand-on filter according to Claim 5 and one or more of the further claims, characterized in that formed between the central reinforcement (21) and the lateral reinforcements (25, 26) are joints (joining edges 27, 28), by means of which the upper region of the filter bag (13), as a result of an appropriate form of the supporting members (14, 15), can be shaped into a polygonal, especially hexagonal, cross-sectional form.

## Revendications

1. Filtre pour la préparation de boissons filtrées, en particulier à base de café torréfié, comprenant un sac filtrant (13) et des organes de support (14, 15) qui sont agencés sur des côtés opposés de ce dernier et qui sont capables de pivoter à partir d'une position de départ en appui à plat sur le sac filtrant (13) dans une position de support sensiblement horizontale, orientée transversalement à la position de départ, caractérise en ce que des ailes de blocage (17, 18), en tant que parties des organes de support (14, 15), sont fixées dans la position de support par un appui bloquant sur des surfaces de blocage renforcées de la face externe du sac filtrant (13).

2. Filtre suivant la revendication 1, caractérisé en ce qu'une zone de bord supérieur du sac filtrant (13) est pourvue d'un renforcement extérieur qui est constitué d'un renforcement central (21) et de renforcements latéraux (25, 26) qui se raccordent de part et d'autre du renforcement central, les renforcements latéraux (25, 26) servant de surfaces de blocage pour l'appui fixateur des ailes de blocage (17, 18).

3. Filtre suivant l'une des revendications 1 et 2, caractérisé en ce que les ailes de blocage (17, 18) sont chaque fois agencées de part et d'autre d'une partie centrale (16) des organes de support (14, 15).

4. Filtre suivant l'une des revendications 1 et 2, caractérisé en ce que les organes de support (14, 15) sont réalisés d'une pièce avec le renforcement central (21), en particulier sous la forme de pièces découpées dans du carton mince.

5. Filtre suivant la revendication 1 ainsi que suivant une ou plusieurs des autres revendications, caractérisé en ce que les renforcements latéraux (25, 26) sont réalisés sous la forme de flans séparés en carton mince qui sont reliés au sac filtrant (13).

6. Filtre suivant la revendication 5 ainsi que suivant une ou plusieurs des autres revendications, caractérise en ce qu'entre le renforcement central (21) et les renforcements latéraux (25, 26) sont formés des emplacements d'articulation (bords 27, 28) par lesquels la zone supérieure du sac filtrant (13) peut être façonnée en une forme à section transversale polygonale, en particulier hexagonale, en raison de la forme correspondante des organes de support (14, 15).

**Fig. 1**

**Fig. 2**

## Fig. 3

## Fig. 4

Fig. 5

Fig. 6

Fig. 7